# FASCICULE DE BREVET EUROPEEN

(11) **EP 2 199 120 B1**
(45) Date de publication et mention de la délivrance du brevet: **28.09.2011**
(21) Numéro de dépôt: 10159217.8
(22) Date de dépôt: 23.11.2009
(51) Int. Cl.: B60G 13/00, B60G 21/05

(54) **Train arrière pour véhicule automobile comprenant deux bras de suspension comportant une ouverture verticale.**
Hinterachse eines Fahrzeuges mit zwei Aufhängungslenker mit senkrechter Öffnung
Rear wheel suspension system comprising two suspension arms having vertical opening

(30) Priorité: 25.11.2008 FR 0857982
(43) Date de publication de la demande: 23.06.2010
(62) Demande divisionnaire de: 09176808.5
(73) Titulaire: Peugeot Citroën Automobiles SA, 78140 Vélizy-Villacoublay (FR)
(72) Inventeur: Le Gourvellec, François, 78120, Rambouillet (FR)

(56) Documents cités:
- FR-A- 2 574 347
- JP-A- 58 105 815
- JP-A- 2001 080 329
- JP-A- 2004 314 651
- US-A1- 2005 099 060
- US-A1- 2007 246 904

## Description

La présente invention concerne un train arrière pour véhicule automobile, ainsi qu'un véhicule automobile équipé de ce train.

Les véhicules automobiles comportent généralement un train arrière lié à la caisse du véhicule, qui supporte les moyeux des roues arrière tout en assurant un guidage de ces roues pour permettre un débattement des suspensions.

Un type de train arrière connu appelé train à traverse déformable, comprend deux bras de suspension longitudinaux disposés sur les cotés du véhicule, l'avant de ces bras étant relié à la caisse du véhicule par une liaison élastique pouvant pivoter suivant un axe sensiblement transversal. Un moyeu de roue est fixé à l'arrière de chaque bras.

Les liaisons élastiques permettent de filtrer des vibrations venant des roues lors du roulage, pour éviter une transmission de vibrations à la caisse du véhicule et limiter les bruits.

Le train arrière comporte une forme générale en « H », une traverse déformable disposée transversalement, étant fixée par ses extrémités sur une partie centrale de chaque bras de suspension. Cette traverse déformable maintient la géométrie des bras de suspension, tout en assurant par une déformation en torsion, la fonction de barre anti-dévers réalisant une limitation de l'angle de roulis de la caisse.

Le train arrière à traverse déformable est généralement réalisé par mécano-soudure d'éléments emboutis et soudés. Ce type de train arrière à traverse déformable offre un bon compromis entre un guidage satisfaisant des roues arrière et un coût modéré. Il est largement répandu.

La caisse est supportée par deux ressorts de suspension hélicoïdaux, prenant appui chacun sur la partie arrière d'un bras de suspension. Un amortisseur hydraulique est disposé sur chaque bras de suspension, en parallèle des ressorts pour amortir les oscillations de la caisse et assurer le confort ainsi que la tenue de route. Les ressorts de suspension et les amortisseurs transmettent aux bras de suspension des efforts relativement élevés, il faut dimensionner ces bras pour limiter leur déformation.

Le document JP-A-58 105 815 est considéré comme étant l'état de la technique le plus proche de l'objet de l'invention et divulgue les caractéristiques du préambule de la revendication 1.

Pour répartir les contraintes dans le bras de suspension et éviter une déformation en torsion, il est connu notamment par le document FR 2 574 347 d'aligner l'amortisseur avec le bras de suspension en positionnant la fixation inférieure de l'amortisseur dans une ouverture située dans la largeur du bras de suspension, l'axe permettant de solidariser la fixation inférieure de l'amortisseur avec le bras de suspension étant soutenu par les parois latérales de ce bras.

Une telle fixation inférieure d'un amortisseur impose des renforts au niveau des parois latérales du bras de suspension afin de supporter les contraintes dues aux efforts de réaction de cet amortisseur, alourdissant et augmentant le coût de fabrication d'un tel bras de suspension.

La présente invention a notamment pour but d'éviter ces inconvénients de la technique antérieure, et de proposer un train arrière comportant un montage simple et économique des amortisseurs qui permet de limiter les contraintes appliquées sur les bras de suspension.

Elle propose à cet effet un train arrière pour véhicule automobile conforme à l'objet de la revendication 1.

En effet, un avantage du train arrière selon l'invention, est que l'amortisseur traversant le bras de suspension dans la largeur de ce bras, avec la base de cet amortisseur fixée sous le bras de suspension de manière centrée, permet d'équilibrer les efforts de réaction.

De plus le train arrière selon l'invention peut comporter une ou plusieurs des caractéristiques suivantes, qui peuvent être combinées entre elles.

Avantageusement, le bras de suspension comporte une tôle supérieure et une tôle inférieure comprenant chacune un perçage aligné l'un sur l'autre formant l'ouverture, un tube de renfort traversant cette ouverture, étant fixé sur ces deux tôles.

La base du tube de renfort peut comporter une découpe comprenant deux perçages alignés transversalement recevant un axe de serrage, pour constituer une chape qui encadre une fixation inférieure de l'amortisseur et la relie au bras de suspension.

Suivant un mode de réalisation, chaque bras de suspension comporte un corps longitudinal réalisé par une tôle emboutie suivant une section ayant la forme générale d'un « U », comportant deux ailes posées sensiblement à plat correspondant respectivement aux tôles supérieure et inférieure.

Le tube de renfort peut être soudé sur le bord des perçages des deux ailes de la section en « U ».

Le tube de renfort peut être réalisé à partir d'une tôle mince qui est roulée à l'intérieur des perçages.

L'ouverture réalisée sur le bras de suspension, peut avoir une forme allongée longitudinalement, la fixation inférieure de l'amortisseur étant sensiblement centrée suivant la longueur de cette ouverture.

Une traverse déformable peut être fixée par ses extrémités, à une partie centrale des bras de suspension.

Selon une variante, chaque bras de suspension comporte un demi-bras avant et un demi-bras arrière, fixés directement sur la traverse déformable.

Selon une autre variante, la traverse déformable comporte des extrémités recourbées vers l'arrière formant des demi-bras arrière de suspension intégrés, deux demi-bras avant de suspension tournés vers l'avant, étant fixés sur cette traverse.

L'invention a aussi pour objet un véhicule automobile comprenant un train arrière tel que décrit ci-dessus.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 présente une vue en perspective d'un demi-train arrière selon l'art antérieur ;
- la figure 2 présente une vue en perspective d'un demi-train arrière selon l'invention, suivant une première version ;
- la figure 3 présente une vue de détail du bras de suspension de ce demi-train arrière ;
- la figure 4 présente une vue en perspective d'un demi-train arrière selon l'invention, suivant une deuxième version ; et
- la figure 5 présente une vue en perspective d'un demi-train arrière selon l'invention, suivant une troisième version.

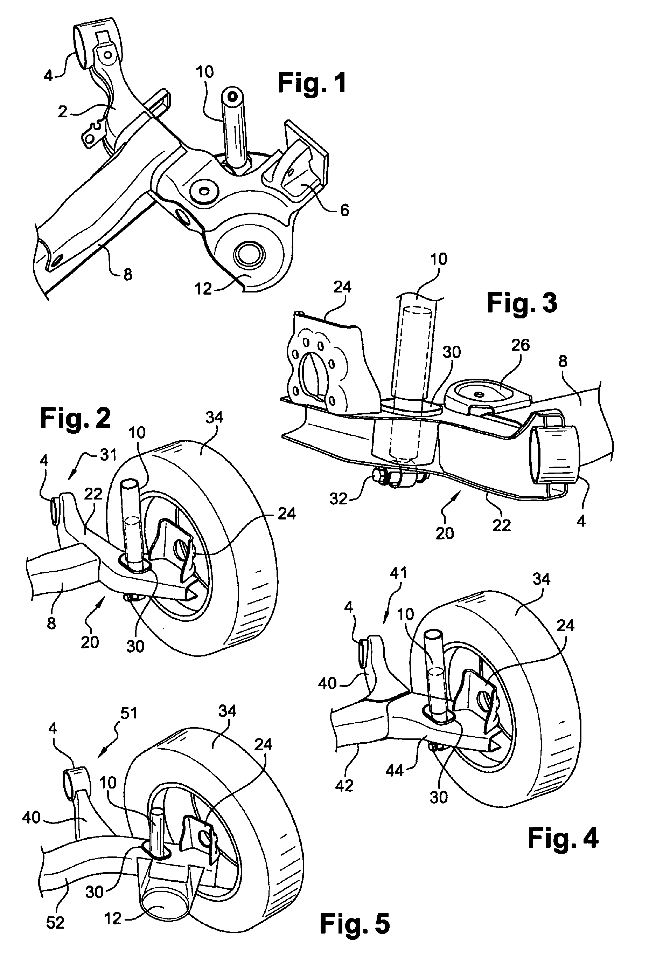

La figure 1 présente la partie latérale droite d'un demi-train arrière comportant un bras de suspension 2 disposé longitudinalement sur le côté du véhicule. L'avant de ce bras de suspension 2 comporte une bague 4 dont l'axe est disposé sensiblement transversalement, cette bague recevant un bloc élastique s'insérant dans une chape fixée sur la caisse du véhicule, pour réaliser une articulation élastique filtrant des vibrations.

L'arrière du bras de suspension 2 comporte un porte-moyeu 6, supportant par des roulements un axe transversal recevant une roue arrière.

Une traverse déformable 8 a ses extrémités fixées aux bras de suspension 2, en un point central de ces bras. Cette traverse déformable 8 maintient la géométrie des bras de suspension 2, et constitue un ressort travaillant en torsion qui limite la différence de débattement de ces bras.

Les bras de suspension 2 comportent à l'arrière, un appui 12 sensiblement horizontal formé par une tôle emboutie, recevant l'extrémité inférieure d'un ressort hélicoïdal de suspension.

Un amortisseur hydraulique 10 comportant un vérin coulissant dont l'extrémité supérieure est fixée à la caisse du véhicule, passe sur le côté extérieur du bras de suspension 2, juste en avant du porte-moyeu 6.

L'extrémité inférieure de cet amortisseur hydraulique 10 comprend une bague comportant un anneau interne en caoutchouc. Un axe transversal traversant cet anneau est fixé sur le bras de suspension 2, pour assurer une liaison élastique. Cet axe transversal peut comprendre une vis de fixation qui vient se visser dans un perçage d'une entretoise cylindrique, soudée sur le côté du bras de suspension 2.

L'amortisseur hydraulique 10 dont le corps comporte un certain diamètre, est suffisamment éloigné du bras de suspension 2 qu'il longe pour éviter un contact lors du débattement de la suspension. L'axe transversal de fixation de la base de l'amortisseur 10, peut être monté dans une chape, ce qui complique la réalisation du train arrière.

L'axe transversal peut aussi être monté en porte-à-faux. Cet axe travaillant alors en flexion, doit comporter un diamètre important pour supporter les charges.

On peut en variante disposer l'amortisseur 10 du côté intérieur du bras de suspension 2, près de la traverse déformable 8. Dans ce cas il est difficile d'aligner et de souder à l'intérieur du bras de suspension 2, une entretoise cylindrique recevant l'axe de fixation de l'amortisseur 10.

Pour ces différentes solutions, la fixation inférieure de l'amortisseur 10 étant décalée par rapport à l'axe du bras de suspension 2, les torsions de ce bras font travailler cet amortisseur avec des défauts d'alignement de ses fixations. Ces défauts fatiguent les anneaux en caoutchouc des fixations, et provoquent des frottements internes ainsi qu'une usure plus élevés de l'amortisseur.

Dans tous les cas, les tôles plus épaisses ou les renforts nécessaires sur le bras de suspension 2 pour résister aux efforts de flexion, entraînent un poids plus élevé du train arrière.

Les figures 2 et 3 présentent pour un train arrière 31, un bras de suspension 20 comportant un corps longitudinal 22 reliant la bague avant 4 à un porte-moyeu 24, sur lequel est soudé la traverse 8.

Le corps longitudinal 22 comprend une tôle emboutie suivant une section sensiblement en « U » qui s'étend le long de ce corps. La section en « U » de ce corps 22 comporte deux ailes posées à plat, le côté ouvert de cette section étant tourné vers l'extérieur du véhicule. Le corps 22 du bras de suspension 2 réalisé en une seule tôle, est économique.

La traverse déformable 8 est soudée vers l'intérieur, sur le côté fermé de la section. Le porte-moyeu 24 supportant une roue 34, et l'appui 26 recevant la base du ressort hélicoïdal de suspension, comprennent chacun une tôle emboutie soudée sur le corps 22.

Les ailes de la section en « U » du corps 22, comportent chacune en avant de l'axe du porte-moyeu 24, un perçage aligné l'un sur l'autre formant une ouverture sensiblement verticale qui traverse le bras de suspension 20.

Cette ouverture reçoit un tube de renfort 30 traversant de part en part le corps 22 du bras de suspension 20, et dépassant de chaque côté, ce tube étant monté de manière ajustée dans les deux perçages des ailes de ce corps. Des soudures réalisées sur les bords des perçages des deux ailes du corps 22, relient ces ailes au tube de renfort 30.

On réalise ainsi un ensemble rigide, le tube de renfort 30 soudé sur les deux ailes du corps 22 et reliant ces deux ailes, fournissant un renforcement important du bras de suspension 20.

La base du tube de renfort 30 comporte une découpe comprenant deux bossages inférieurs, contenant chacun un perçage recevant une vis de fixation 32 aligné suivant un axe transversal du véhicule, qui traverse ce tube. Les bossages forment une chape recevant à l'intérieur la base de l'amortisseur 10, la vis de fixation 32 traversant la bague inférieure de cet amortisseur qui est soutenu des deux côtés par le tube de renfort 30.

Avantageusement, le tube de renfort 30 est réalisé à partir d'une tôle mince qui est roulée, ce qui représente un procédé économique.

On forme ainsi un montage en chape équilibrant les efforts, la vis de fixation 32 ne subissant pas de contrainte en flexion. La vis de fixation 32 peut avoir un diamètre ainsi qu'une longueur réduits par rapport au montage en porte-à-faux.

De plus les efforts transmis par l'amortisseur 10 passant sensiblement par l'axe du bras de suspension 20, appliquent peu de contraintes en torsion sur ce bras. Le corps 22 peut être réalisé plus facilement à partir d'une tôle emboutie d'épaisseur réduite, ce qui permet une fabrication plus légère avec une précision améliorée.

L'ouverture réalisée sur les ailes du corps 22 du bras de suspension 20, a une forme allongée longitudinalement. La vis de fixation 32 est centrée au milieu de cette forme allongée, de manière à disposer suivant la direction longitudinale, la base de l'amortisseur 10 sensiblement au centre de cette ouverture quand la suspension est au repos.

L'amortisseur 10 peut ainsi lors des mouvements du bras de suspension 20 pendant le débattement des suspensions, osciller dans l'ouverture allongée relativement à ce bras, vers l'avant ou l'arrière.

De plus le diamètre longitudinal du tube de renfort 30 peut être réduit vers le bas et s'élargir vers le haut, la section du tube de renfort 30 est ainsi réduite au minimum nécessaire pour assurer les mouvements de l'amortisseur 10.

La figure 4 présente en variante un train arrière 41, comportant une traverse déformable 42 comprenant soudés à son extrémité, un demi-bras avant de suspension 40 tourné vers l'avant, qui se raccorde sur un demi-bras arrière de suspension 44 tourné vers l'arrière. Ces deux demi-bras 40, 44 reliés ensemble, forment un bras complet ayant les mêmes fonctions que le bras de suspension présenté précédemment, comprenant l'articulation élastique à l'avant et le porte-moyeu 24 à l'arrière.

Le corps longitudinal du demi-bras arrière 44 peut de la même manière, être réalisé par une tôle emboutie suivant une section sensiblement en « U » dont l'ouverture est tournée vers l'extérieur du véhicule.

Les ailes de la section en « U » du demi-bras arrière 44, comportent chacune un perçage formant une ouverture verticale qui reçoit le tube de renfort 30 traversant le bras de suspension 20. On obtient ainsi pour le montage de l'amortisseur 10 et le renforcement du demi-bras arrière de suspension 44, les mêmes avantages que ceux présentés ci-dessus.

La figure 5 présente pour une deuxième variante, un train arrière 51 comportant une traverse déformable 52 dont les extrémités sont recourbées vers l'arrière, pour former deux demi-bras arrière de suspension intégrés. Au niveau de la courbure de cette traverse déformable 52, un demi-bras avant de suspension 40 tourné vers l'avant est soudé.

On réduit ainsi le nombre de pièces constituant le train arrière 51, ce qui facilite la gestion de cette production.

La traverse déformable 52 comprenant ses parties d'extrémité formant les demi-bras arrière, est réalisée par une tôle emboutie suivant une section sensiblement en « U » dont l'ouverture est tournée vers l'avant du véhicule.

Les ailes de la section en « U » des demi-bras arrière, reçoivent de la même manière le tube de renfort 30.

## Revendications

1. Train arrière (31, 41, 51) pour véhicule automobile, comprenant deux bras de suspension (22, 44) oscillant dans un plan sensiblement vertical autour d'un axe situé à l'avant, et comportant chacun à l'arrière de leur bras respectif, un porte-moyeu (24) supportant une roue arrière (34), ledit train comprenant en outre une traverse déformable (8, 42, 52) reliant les deux bras de suspension (22, 24) chaque bras de suspension (22, 24) comprenant une ouverture sensiblement verticale au contour fermé, située dans la largeur du bras, disposée en avant de l'axe du porte-moyeu (24), entre la traverse (8, 42, 52) et le porte-moyeu (24), et recevant un amortisseur (10) dont une fixation inférieure est liée au bras de suspension (22, 44), **caractérisé en ce que** l'ouverture est traversée de part en part par l'amortisseur (10), la fixation inférieure de l'amortisseur (10) faisant saillie sous ladite ouverture.

2. Train arrière (31, 41, 51) selon la revendication précédente, **caractérisé en ce que** le bras de suspension (22, 44) comporte une tôle supérieure et une tôle inférieure comprenant chacune un perçage aligné l'un sur l'autre formant l'ouverture, un tube de renfort (30) traversant cette ouverture, étant fixé sur ces deux tôles.

3. Train arrière (31, 41, 51) selon la revendication précédente, **caractérisé en ce que** la base du tube de renfort (30) comporte une découpe comprenant deux perçages alignés transversalement recevant un axe de serrage (32), pour constituer une chape qui encadre la fixation inférieure de l'amortisseur (10) et la relie au bras de suspension (22, 44).

4. Train arrière (31, 41, 51) selon la revendication 2 ou 3, **caractérisé en ce que** le bras de suspension comporte un corps longitudinal (22, 44) réalisé par une tôle emboutie suivant une section ayant la forme générale d'un « U », comportant deux ailes posées sensiblement à plat correspondant respectivement aux tôles supérieure et inférieure.

5. Train arrière (31, 41, 51) selon la revendication 4, **caractérisé en ce que** le tube de renfort (30) est soudé sur le bord des perçages des deux ailes de la section en « U ».

6. Train arrière (31, 41, 51) selon l'une quelconque des revendications 2 à 5, **caractérisé en ce que** le tube de renfort (30) est réalisé à partir d'une tôle mince qui est roulée à l'intérieur des perçages.

7. Train arrière (31, 41, 51) selon l'une quelconque des revendications précédentes, **caractérisé en ce que** l'ouverture réalisée sur le bras de suspension (22, 44), a une forme allongée longitudinalement, la fixation inférieure de l'amortisseur (10) étant sensiblement centrée suivant la longueur de cette ouverture.

8. Train arrière (31) selon l'une quelconque des revendications précédentes, **caractérisé en ce que** la traverse déformable (8) est fixée par ses extrémités, à une partie centrale des bras de suspension (22).

9. Train arrière (41) selon l'une quelconque des revendications 1 à 7, **caractérisé en ce que** chaque bras de suspension comporte un demi-bras avant (40) et un demi-bras arrière (44), fixés directement sur la traverse déformable (42).

10. Train arrière (51) selon l'une quelconque des revendications 1 à 7, **caractérisé en ce que** la traverse déformable (52) comporte des extrémités recourbées vers l'arrière formant deux demi-bras arrière de suspension intégrés ; deux demi-bras avant de suspension (40) tournés vers l'avant étant fixés sur cette traverse (52).

11. Véhicule automobile comportant un train arrière (31, 41, 51) suivant l'une quelconque des revendications précédentes.

## Claims

1. Motor vehicle rear axle system (31,41,51), comprising two suspension arms (22, 44) oscillating in a substantially vertical plane about an axis located at the front, and each comprising at the rear of the respective arm thereof a hub carrier (24) supporting a rear wheel (34), said axle system further comprising a deformable cross-member (8, 42, 52) connecting the two suspension arms (22, 24), each suspension arm (22, 24) comprising a substantially vertical opening which has a closed contour, is located in the width of the arm and is arranged in front of the axis of the hub carrier (24), between the cross-member (8, 42, 52) and the hub carrier (24), and receives a shock absorber (10), a lower fastening of which is connected to the suspension arm (22, 44), **characterised in that** the shock absorber (10) passes right through the opening, the lower fastening of the shock absorber (10) projecting beneath said opening.

2. Rear axle system (31, 41, 51) according to the preceding claim, **characterised in that** the suspension arm (22, 44) comprises an upper plate and a lower plate, each comprising a hole, the holes being aligned with one another to form an opening, a reinforcing tube (30) passing through this opening and being fixed to these two plates.

3. Rear axle system (31, 41, 51) according to the preceding claim, **characterised in that** the base of the reinforcing tube (30) comprises a blank comprising two transversely aligned holes receiving a clamping axle (32), for forming a clevis which surrounds the lower fastening of the shock absorber (10) and connects said fastening to the suspension arm (22, 44).

4. Rear axle system (31, 41, 51) according to either claim 2 or claim 3, **characterised in that** the suspension arm comprises a longitudinal body (22, 44) formed by a pressed plate having a generally U-shaped cross-section, comprising two wings which are positioned in a substantially planar manner and correspond respectively to the upper and lower plates.

5. Rear axle system (31, 41, 51) according to claim 4, **characterised in that** the reinforcing tube (30) is welded on the edge of the holes in the two wings of the U-shaped section.

6. Rear axle system (31, 41, 51) according to any one of claims 2 to 5, **characterised in that** the reinforcing tube (30) is formed from a thin plate which is rolled inside the holes.

7. Rear axle system (31, 41, 51) according to any one of the preceding claims, **characterised in that** the opening made in the suspension arm (22, 44) has a longitudinally extended form, the lower fastening of the shock absorber (10) being substantially centred along the length of this opening.

8. Rear axle system (31) according to any one of the preceding claims, **characterised in that** the deformable cross-member (8) is fixed by the ends thereof to a central part of the suspension arms (22).

9. Rear axle system (41) according to any one of claims 1 to 7, **characterised in that** each suspension arm comprises a front half-arm (40) and a rear half-arm (44), which are fixed directly on the deformable cross-member (42).

10. Rear axle system (51) according to any one of claims 1 to 7, **characterised in that** the deformable cross-member (52) comprises ends which are curved towards the rear and form two integrated rear suspension half-arms; two front suspension half-arms (40) turned towards the front being fixed on said cross-member (52).

11. Motor vehicle comprising a rear axle system (31, 41, 51) according to any one of the preceding claims.

## Patentansprüche

1. Hinterachse (31, 41, 51) für ein Kraftfahrzeug, umfassend zwei Aufhängungsarme (22, 44), die auf einer im Wesentlichen vertikalen Ebene um eine vorne angebrachte Achse schwingen, und umfassend jeweils hinter ihrem entsprechenden Arm einen Nabenträger (24), der ein Hinterrad (34) trägt, wobei die Achse außerdem einen verformbaren Querträger (8, 42, 52) umfasst, der die zwei Aufhängungsarme (22, 24) verbindet, wobei jeder Aufhängungsarm (22, 24) eine im Wesentlichen vertikale Öffnung mit einem festen Umriss umfasst, die sich in der Breite des Arms befindet, vor der Achse des Nabenträgers (24), zwischen dem Querträger (8, 42, 52) und dem Nabenträger (24), angeordnet ist und einen Dämpfer (10) aufnimmt, von dem eine untere Befestigung mit dem Aufhängungsarm (22, 44) verbunden ist, **dadurch gekennzeichnet, dass** die Öffnung von einer Seite zur anderen von dem Dämpfer (10) durchsetzt wird, wobei die untere Befestigung des Dämpfers (10) unter der Öffnung hervorsteht.

2. Hinterachse (31, 41, 51) nach dem vorhergehenden Anspruch, **dadurch gekennzeichnet, dass** der Aufhängungsarm (22, 44) ein oberes Blech und ein unteres Blech umfasst, die jeweils eine Bohrung umfassen, die aufeinander ausgerichtet sind und die Öffnung bilden, wobei ein Verstärkungsrohr (30), das diese Öffnung durchsetzt, an diesen zwei Blechen befestigt ist.

3. Hinterachse (31, 41, 51) nach dem vorhergehenden Anspruch, **dadurch gekennzeichnet, dass** die Basis des Verstärkungsrohrs (30) einen Ausschnitt umfasst, der zwei Bohrungen umfasst, die quer ausgerichtet sind und eine Klemmachse (32) aufnehmen, um eine Kappe zu bilden, die die untere Befestigung der Dämpfung (10) einfasst und sie mit dem Aufhängungsarm (22, 44) verbindet.

4. Hinterachse (31, 41, 51) nach Anspruch 2 oder 3, **dadurch gekennzeichnet, dass** der Aufhängungsarm einen Längskörper (22, 44) umfasst, der durch ein tiefgezogenes Blech gemäß einem Abschnitt mit der allgemeinen Form eines U realisiert ist, der zwei Flügel umfasst, die im Wesentlichen flach bezüglich des oberen Blechs bzw. des unteren Blechs gelegt sind.

5. Hinterachse (31, 41, 51) nach Anspruch 4, **dadurch gekennzeichnet, dass** das Verstärkungsrohr (30) auf dem Rand der Bohrungen der zwei Flügel des U-förmigen Abschnitts aufgeschweißt ist.

6. Hinterachse (31, 41, 51) nach einem der Ansprüche 2 bis 5, **dadurch gekennzeichnet, dass** das Verstärkungsrohr (30) aus einem dünnen Blech hergestellt ist, das im Innern der Bohrungen gerollt ist.

7. Hinterachse (31, 41, 51) nach einem der vorhergehenden Ansprüche, **dadurch gekennzeichnet, dass** die Öffnung, die auf dem Aufhängungsarm (22, 44) realisiert ist, eine gestreckte Längsform aufweist, wobei die untere Befestigung des Dämpfers (10) im Wesentlichen in der Länge dieser Öffnung zentriert ist.

8. Hinterachse (31) nach einem der vorhergehenden Ansprüche, **dadurch gekennzeichnet, dass** der verformbare Querträger (8) mit seinen Enden an einem zentralen Teil der Aufhängungsarme (22) befestigt ist.

9. Hinterachse (41) nach einem der Ansprüche 1 bis 7, **dadurch gekennzeichnet, dass** jeder Aufhängungsarm einen vorderen Halbarm (40) und einen hinteren Halbarm (44) aufweist, die direkt auf dem verformbaren Querträger (42) befestigt sind.

10. Hinterachse (51) nach einem der Ansprüche 1 bis 7, **dadurch gekennzeichnet, dass** der verformbare Querträger (52) nach hinten gekrümmte Enden aufweist, die zwei integrierte hintere Aufhängungshalbarme bilden; wobei zwei vordere Aufhängungshalbarme (40), die nach vorne gedreht sind, auf diesem Querträger (52) befestigt sind.

11. Kraftfahrzeug, umfassend eine Hinterachse (31, 41, 51) gemäß einem der vorhergehenden Ansprüche.
